(19) **Europäisches Patentamt**
**European Patent Office**
**Office européen des brevets**

(11) **EP 2 998 667 B1**

(12) **EUROPEAN PATENT SPECIFICATION**

(45) Date of publication and mention
of the grant of the patent:
**25.11.2020  Bulletin 2020/48**

(51) Int Cl.:
*F25B 49/00* *(2006.01)*     *F25B 49/02* *(2006.01)*

(21) Application number: **14003226.9**

(22) Date of filing: **17.09.2014**

(54) **A method, an apparatus and a computer programm product for evaluating the energy efficiency of a refrigeration machine and/or heat pump**

Ein Verfahren, eine Vorrichtung und ein Komputerprogrammprodukt zur Bewertung der Energieeffizienz einer Kältemaschine und/oder Wärmepumpe

Un procédé, un appareil et un produit de programme informatique permettant d'évaluer l'efficacité énergétique d'une machine de réfrigération et/ou de pompe à chaleur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.03.2016  Bulletin 2016/12**

(73) Proprietor: **Hochschule Biberach**
**88400 Biberach (DE)**

(72) Inventors:
• **Becker, Martin**
**88400 Biberach an der Riß (DE)**

• **Köberle, Thomas**
**89077 Ulm (DE)**

(74) Representative: **Müller-Boré & Partner**
**Patentanwälte PartG mbB**
**Friedenheimer Brücke 21**
**80639 München (DE)**

(56) References cited:
**EP-A2- 0 100 210     JP-A- 2007 278 618**
**US-A- 5 735 134      US-A1- 2003 019 221**

**Description**

The invention relates to a method, an apparatus and a computer program product for evaluating the energy efficiency of a refrigeration machine and/or a heat pump.

The energy efficiency of a refrigeration machine and/or a heat pump is usually evaluated as coefficient of performance (COP) or as energy efficiency ratio (EER). The energy efficiency of a refrigeration machine or a heat pump represents an important characteristic of the machine. Therefore, it is important to be able to measure the energy efficiency in operation of the refrigeration machine or heat pump.

A refrigeration machine or heat pump may comprise a working fluid running through a thermodynamic cycle. Thereby, the working fluid runs through an evaporator evaporating the working fluid, a compressor that compresses the evaporated working fluid, a condenser that condenses the working fluid, and an expansion valve that expands the condensed working fluid.

Document US 5 735 134 A  relates to a vapor compression system with set point optimization generating a set of thermodynamic operating parameters such that the system operates energy-efficiently. Based on environmental conditions such as indoor and outdoor temperature as well as thermal load, the set of parameters for steady-state set point is generated. The system also monitors actual system properties in real-time and provides them as feedback to the set point computation module. Based on these actual real-time measurements, a new steady-state set point can be generated to enable the system to continue operating upon change in environmental or thermal load requirements. Moreover, document US 5 735 134 A discloses a method and an apparatus for evaluating the energy efficiency of a refrigeration machine and/or a heat pump based on an optimization of a plurality of actuating variables of the system, including the compressor speed, the valve opening area, the evaporator fan speed, and the condenser fan speed.

One way to determine the energy efficiency of the refrigeration machine or heat pump requires a detection of the mass flow of the working fluid. The mass flow of the working fluid may be detected directly by use of a mass-flow sensor, which is very expensive, or indirectly by calculation, which may be inaccurate.

It is a problem of the invention to provide an improved evaluation of the energy efficiency of a refrigeration machine and/or a heat pump, in particular a less expensive and/or more accurate evaluation.

This problem is solved by the subject matter of the independent claims. Preferred embodiments are the subject of the dependent claims.

One aspect relates to a method according to claim 1 for evaluating the energy efficiency of a refrigeration machine and/or a heat pump, wherein a working fluid of the refrigeration machine and/or heat pump is running through an expansion valve at one point of a thermodynamic cycle, wherein:

- at different positions of the thermodynamic cycle, at least one thermodynamic parameter of the working fluid is detected;
- the mass flow of the working fluid is determined by using a classification of the opening of the expansion valve and some of the detected thermodynamic parameters of the working fluid;
- a cooling power and/or a heating power of the refrigeration machine and/or heat pump is determined as a function of the mass flow of the working fluid; and
- the energy efficiency of the refrigeration machine and/or heat pump is evaluated by comparing the cooling power and/or heating power to an electrical power used to power the refrigeration machine and/or heat pump.

The method is used to evaluate the energy efficiency of an apparatus comprising a refrigeration cycle, e.g. a refrigeration plant, chiller, heat pump, air conditioning unit, air handling unit, gyrostats, ice machine, HVAC (heating, ventilation, and air conditioning), etc. The apparatus may, in particular be a refrigeration machine like a chiller, a heat pump, or may be used as both a refrigeration machine and a heat pump. The evaluated apparatus comprises a working fluid running in a thermodynamic cycle, e.g. a refrigerant.

At one point of the thermodynamic cycle, the working fluid runs through an expansion valve. The evaluated apparatus may comprise further components at other points of the thermodynamic cycle, e.g. an evaporator, a compressor, a refrigerant collector, and/or a condenser.

At different positions of the thermodynamic cycle of the chiller and/or heat pump, one or more thermodynamic parameters of the working fluid are measured, sensed, detected and/or registered. Thereby, different positions of the thermodynamic cycle refer to positions of the thermodynamic cycle where the working fluid has a different state function, e.g. a different pressure, temperature, and/or state of matter.

As part of the calculation to evaluate the energy efficiency, the mass flow of the working fluid is determined, e.g. calculated. Therefore, thermodynamic parameters of the working fluid at different positions of the thermodynamic cycle are evaluated, e.g. the temperature and the pressure of the working fluid. Furthermore, a classification of the opening of the expansion valve is established. The classification may be a characteristic of the opening size and/or opening duration of the expansion valve. In particular for pulse duration modulated expansion valves, the average opening duration may be used as classification. The classification may be a grade given as percentage, a cross section of the opening size, a step number, an average opening duration, and/or any other identification that allows a classification of the opening of the expansion valve. Further variables and/or parameters may be included in the determination, in particular variables and/or parameters relating to the consistency of the working fluid. This may include fluid properties of the working fluid.

Since the mass flow of the working fluid in the thermodynamic cycle depends (amongst others) on the opening of the expansion valve, the method allows an 'indirect' detection of the mass flow through the refrigeration machine and/or heat pump in a very accurate manner. Thus, the mass flow may be established and/or calculated indirectly, without detecting the mass flow directly by a mass-flow sensor, e.g. without an expensive Coriolis sensor. This reduces the cost of the evaluation, since expensive mass-flow sensors become unnecessary. Thus, the mass flow is determined indirectly by recognition of the opening size of the expansion valve, but still accurately enough to provide an acceptable evaluation of the energy efficiency.

The cooling capacity of the refrigeration machine, and/or the heating capacity of the heat pump, depends on the mass flow. Therefore, by determining the mass flow, also the cooling capacity and power and/or heating capacity and power may be calculated.

The determined cooling power and/or heating power is compared to (e.g., divided by) the electrical power used to power and run the refrigeration machine and/or heat pump. The electrical power is usually needed to power the compressor that compresses the evaporated working fluid at one point of the thermodynamic cycle. The energy efficiency may, e.g., be expressed as COP which is defined, e.g., in ANSI/AHRI 550/590, DIN EN 14511, DIN EN 13771-1, and/or VDMA 24247-7. The energy efficiency may also be expressed as energy efficiency ratio EER which is, e.g., defined in ANSI/AHRI 550/590 and/or DIN EN 13771-1.

For a heat pump, further units to express the energy efficiency in are defined in VDI 4650. For a refrigeration machine, further units to express the energy efficiency in are defined in VDMA 24247-7.

The method may be carried out without special sensors that directly detect the mass flow. The method may be carried out by using only standard equipment and detectors like a temperature detector, a pressure detector, and/or a power measuring device. While the method enables an indirect determination of the mass flow, its accuracy exceeds previously known evaluation methods that indirectly establish the mass flow. Furthermore, the method may be implemented into existing refrigeration machines and/or heat pumps without the need for expensive equipment. Thereby, the costs of accurately evaluating the energy efficiency of the refrigeration machine and/or heat pump are reduced.

According to an embodiment, the classification of the opening of the expansion valve and a corresponding flow coefficient and/or flow factor of the working fluid is determined to calculate the mass flow of the working fluid. The classification of the opening of the expansion valve may be provided by a controller controlling the expansion valve. Some manufacturers of expansion valves provide and/or publish information about a relation between the opening size and the flow coefficient $k_v$ (as defined by VDI/VDE 2173) of the working fluid through the expansion valves they manufacture. Alternatively or additionally, the flow coefficient of the working fluid may be determined. Together with information about thermodynamic parameters of the working fluid, e.g. at positions before and after the expansion valve, and material properties of the working fluids, the mass flow may be calculated.

According to an embodiment, the expansion valve is provided as electronically controlled expansion. The controller controlling the expansion valve may provide information about the actual opening size of the expansion valve while the refrigeration machine and/or heat pump is in operation. The controller provides this information to a processor and/or outputs the information for a human that further processes this information.

According to an embodiment, at least one of the pressure and the temperature of the working fluid is detected as thermodynamic parameter at predetermined positions of the thermodynamic cycle. The pressure and temperature of the working fluid may easily be detected by standard components and contain important information about the state function of the working fluid. Temperature and/or pressure of the working fluid are detected at different positions at the thermodynamic cycle, meaning at positions of the thermodynamic cycle where the working fluid has a different pressure, a different temperature, and/or a different state of matter.

According to an embodiment, only the temperature and the pressure are directly detected as thermodynamic parameters of the working fluid. Detectors for the temperature and the pressure are less expensive than detectors for the mass flow, like a mass-flow sensor. Therefore, implementing only temperature and pressure sensors reduces the cost for implementing the method.

According to the invention, at least one entrance thermodynamic parameter of the working fluid is detected at a position of the thermodynamic cycle where the working fluid enters the expansion valve. The position of the thermodynamic cycle where the working fluid enters the expansion valve refers to a position in the cycle before the expansion valve, where the working fluid has substantially the same thermodynamic parameters as when entering the expansion valve. The entrance thermodynamic parameters may be detected at a position between the expansion valve and the preceding component of the refrigeration machine and/or heat pump, e.g., a preceding condenser of the heat pump and/or refrigeration machine. As entrance thermodynamic parameter, the entrance temperature and the entrance pressure of the working fluid may be detected.

According to an embodiment, an exit thermodynamic parameter of the working fluid is detected at a position of the thermodynamic cycle where the working fluid exits the expansion valve. This position relates to a position between the expansion valve and the following component of the thermodynamic cycle, e.g., a following evaporator of the chiller and/or heat pump. At this position, the working fluid comprises substantially the same thermodynamic parameters as when it exists the expansion valve. As exit thermodynamic parameter, the exit pressure of the working fluid may be detected.

According to the invention, the mass flow of the working fluid is determined using at least one entrance thermodynamic parameter of the working fluid and the exit thermodynamic parameter of the working fluid. This may be accomplished by determining an entrance density of the working fluid as a function $f$ of the entrance temperature, the entrance pressure and fluid properties of the working fluid:

$$\rho_{entrance} = f\left(T_{entrance}, p_{entrance}, fluid\_properties\right)$$

wherein: $\rho_{entrance}$ is defined as the entrance density of the working, e.g. in kg/m$^3$;
$T_{entrance}$ is defined as the entrance temperature of the working fluid, e.g. in K; and
$p_{entrance}$ is defined as the entrance pressure of the working fluid, e.g. in bar.

For a gradually controlled expansion valve, a flow factor $k_v$ may further be calculated as a function of the opening size of the expansion valve which may be opened in predetermined steps. Thus, the flow factor $k_v$ may be established as a function $f$ of the opening steps of the expansion valve:

$$k_v = f(steps).$$

For a pulse duration modulated expansion valve, the flow factor $k_v$ may be calculated as a function of the average opening duration of the expansion valve, e.g. as an average opening grade. Therein, the opening grade may be established as a percentage, e.g., as a percentage of time of one pulse period during which the expansion valve is opened. Thus, the flow factor $k_v$ may be established as a function of $f$ of the opening grade of the expansion valve:

$$k_v = f(grade).$$

More generally speaking, the flow factor $k_v$ may be established as a function of $f$ of the opening of the expansion valve:

$$k_v = f(opening).$$

From the entrance pressure (as entrance thermodynamic parameter) and the exit pressure (as exit thermodynamic parameter) of the working fluid, the pressure difference of the working fluid before and after the expansion valve may be calculated. Thus, the volume flow of the working fluid through the thermodynamic cycle may be calculated as a function of these properties, e.g. according to the following formula:

$$\dot{V}_F = k_v \cdot \sqrt{\frac{\Delta p \cdot \rho_0}{\Delta p_0 \cdot \rho_{entrance}}}$$

wherein: $\dot{V}_F$ is defined as the volume flow of the working fluid, e.g. in m$^3$/h;
$k_v$ is defined as flow factor of the working fluid, e.g. in m$^3$/h;
$\Delta p$ is defined as difference between the exit pressure $p_{exit}$ and the entrance pressure $p_{entrance}$ of the working fluid, e.g. in bar;
$\Delta p_0$ is defined as reference difference between the exit pressure and the entrance pressure, e.g. 1 bar;
$\rho_{entrance}$ is defined as entrance density of the working fluid at the entrance of the expansion valve, e.g. in kg/m$^3$; and
$\rho_0$ is defined as the reference density of the working fluid, e.g. 1000 kg/m$^3$.

Using the volume flow, the mass flow may be calculated by the following formula:

$$\dot{m}_F = \dot{V}_F \cdot \rho_{entrance}$$

wherein: $\dot{m}_F$ is defined as the mass flow of the working fluid, e.g. in kg/h.

According to an embodiment wherein the method is used to evaluate the energy efficiency of a refrigeration machine, at least one superheat thermodynamic parameter of the working fluid is detected at a position of the thermodynamic cycle where the working fluid exits an evaporator of the refrigeration machine. Therein, the position of the thermodynamic cycle where the working flow exits an evaporator may refer to a position of the thermodynamic cycle between the evaporator and a following element of the thermodynamic cycle, e.g. a compressor. As thermodynamic parameter, e.g. the superheat temperature and/or the superheat pressure of the working fluid may be detected.

According to an embodiment wherein the method is used to evaluate the energy efficiency of a heat pump, at least one compressor thermodynamic parameter of the working fluid is detected at a position of the thermodynamic cycle where the working fluid exits a compressor of the heat pump. Therein, the position of the thermodynamic cycle where the working flow exits a compressor may refer to a position of the thermodynamic cycle between the compressor and a following element of the thermodynamic cycle, e.g., a condenser. As compressor thermodynamic parameter, e.g. the compressor temperature and/or the compressor pressure of the working fluid may be detected.

In a further development of the two preceding embodiments, for a position of the thermodynamic cycle where the working fluid enters the expansion valve, an entrance enthalpy of the working fluid is determined using the at least one entrance thermodynamic parameter. The entrance enthalpy $h_{entrance}$ may be calculated as a function of the entrance temperature, the entrance pressure, and fluid properties of the working fluid:

$$h_{entrance} = f\left(T_{entrance}, p_{entrance}, fluid\_properties\right).$$

For a refrigeration machine, for a position of the thermodynamic cycle where the working fluid exits the evaporator, a superheat enthalpy of the working fluid is determined using the at least one superheat thermodynamic parameter. The superheat enthalpy $h_{superheat}$ may be calculated as a function of the superheat temperature and the superheat pressure together with fluid properties of the working fluid with the following formula:

$$h_{superheat} = f\left(T_{superheat}, p_{superheat}, fluid\_properties\right).$$

For a heat pump, for a position of the thermodynamic cycle where the working fluid exits the compressor or enters a heat exchanger like a condenser, a compressor enthalpy of the working fluid is determined using the at least one compressor thermodynamic parameter. The compressor enthalpy $h_{compressor}$ may be calculated as a function of the compressor temperature and the compressor pressure together with fluid properties of the working fluid with the following formula:

$$h_{compressor} = f\left(T_{compressor}, p_{compressor}, fluid\_properties\right).$$

The cooling power of a refrigeration is determined as enthalpy difference between the superheat enthalpy $h_{superheat}$ and the entrance enthalpy $h_{entrance}$. The heating power of a heat pump is determined as enthalpy difference between the compressor enthalpy $h_{compressor}$ and the entrance entropy $h_{entrance}$. The cooling or heating power may be determined from said enthalpy difference and the previously established mass flow, e.g. by the following formula:

$$\dot{Q} = \dot{m}_F \cdot \Delta h$$

wherein: Q is defined as cooling power $\dot{Q}_0$ of the refrigeration machine or the heating power $\dot{Q}_c$ of heat pump, e.g. in kW;
$\dot{m}_F$ is defined as the mass flow of the working fluid, e.g. in kg/s; and
$\Delta h$ is defined as enthalpy-difference $h_{superheat}$ or $h_{compressor}$ minus $h_{entrance}$.

Together with the electrical power used to power the refrigeration machine and/or heat pump, the Coefficient of Performance COP (and/or Energy efficiency Ratio EER, or Total Coefficient of Performance TCOP) may be calculated and, thus, the relation of the use (the cooling power and/or heating power) to the cost (the electrical power $P_{el}$ consumed by the compressor), e.g. by the following formula:

$$COP = \frac{\dot{Q}}{P_{el}}$$

wherein: $P_{el}$ is defined as the electrical power used to power the refrigeration machine and/or heat pump, e.g. in kW; $\dot{Q}$ is defined as cooling power $\dot{Q}_0$ of the refrigeration machine or the heating power $\dot{Q}_C$ of heat pump, e.g. in kW; and COP is defined as the coefficient of performance.

An integration over the cooling power and/or heating power and the electrical power may be used to calculate the work of the refrigeration machine and/or heat pump.

According to an embodiment, the total energy performance factor TEPF (as defined in VDMA 24247-7) of the refrigeration machine is evaluated as measurement of its energy efficiency.

According to an embodiment, the seasonal energy efficiency ratio SEER (as defined in ANSI/AHRI 510/240) of the refrigeration machine is evaluated as measurement of its energy efficiency.

According to an embodiment, the work classification B, JAZ (as defined in VDI 4650) of the heat pump is evaluated as measurement of its energy efficiency.

According to an embodiment, the energy efficiency of a refrigeration machine and/or a heat pump that comprises two or more cooling positions is evaluated. These cooling positions may comprise an evaporator each. Such a refrigeration machine and/or heat pump may comprise multiple expansion valves, e.g., for each cooling position a corresponding expansion valve. Therein, some steps of the method may be repeated for each cooling position and/or expansion valve to calculate the total energy efficiency of the refrigeration machine and/or heat pump.

Some or all of the estimations and/or calculations of the method may be carried out automatically, e.g., by a computer system.

One aspect relates to a computer program product according to claim 12, such as a computer-readable storage medium, comprising computer readable instructions which, when loaded and executed on a computer system, cause the computer system to perform operations according to the method described above as the first aspect. In particular, the computer readable instructions may enable a computer system to calculate the energy efficiency of the refrigeration machine and/or heat pump according to the method described above. The computer readable instructions may also enable controlling of the opening size of the expansion valve, and of detectors and/or sensors at different positions of the thermodynamic cycle. Therein, the computer program product comprises coding segments that when loaded and executed on a suitable system can execute an evaluation method according to the invention. The storage medium according to the invention can be a volatile or permanent storage medium, such as a DVD, a CD, a floppy disk, an EEPROM, a memory card, a data stream and so on. The suitable system may comprise a general purpose computer like a PC, a workstation, a microcontroller, an embedded PC, a tablet PC, a smartphone and the like.

One aspect relates to an apparatus according to claim 9 for evaluating the energy efficiency of a refrigeration machine and/or a heat pump, wherein a working fluid of the refrigeration machine and/or heat pump is running through an expansion valve at one point of a thermodynamic cycle, comprising:

- detectors at different positions of the thermodynamic cycle, wherein each detector detects at least one thermodynamic parameter of the working fluid;
- a processor that determines the mass flow of the working fluid using a classification of the opening size of the expansion valve and some of the detected thermodynamic parameters of the working fluid;
- wherein the processor determines a cooling power and/or a heating power of the refrigeration machine and/or heat pump as a function of the mass flow of the working fluid; and
- wherein the processor evaluates the energy efficiency of the refrigeration machine and/or heat pump by comparing the cooling power and/or heating power to an electrical power used to power the refrigeration machine and/or heat pump.

The apparatus may include the refrigeration machine and/or heat pump, or may be implemented as a separate apparatus that may be connected to the refrigeration machine and/or heat pump. The detectors may detect thermodynamic parameters like the temperature and the pressure of the working fluid at different positions, e.g. at a position where the working fluid enters the expansion valve, at a position where the working fluid exits the expansion valve, and/or at a position where the working fluid exits the evaporator.

The apparatus may be used to carry out the method described above.

According to an embodiment, the apparatus comprises at least one controller that controls the opening size of the expansion valve and that provides the processor with the according classification of the opening size of the expansion valve. The controller may be a controller for controlling an electrically controlled expansion valve. An identification of the opening size, e.g. a classification like a step number may then be sent to the processor. The according classification is the classification of the opening size that the expansion valve uses at the time of the evaluation of the energy efficiency. The energy efficiency is evaluated in operation of the chiller and/or heat pump.

The processor may be implemented as a computer system.

According to an embodiment, the apparatus comprises a bus that transfers signals between the controller and the processor. The bus may be implemented as Modbus RTU or TCP, LON, CAN, KNX, EIB, BACNet or the like. The signals may contain information about thermodynamic parameters of the working fluid and/or information about the opening of the expansion valve. The bus may also be connected to an electrical meter measuring the electrical power used to power the chiller and/or heat pump, like a compressor. Thus, the signals may also contain information about electrical energy used to power the chiller and/or heat pump.

The following figures describe features and/or aspects of embodiments of the invention. Single features of these embodiments may be implemented in other embodiments.

Figure 1    shows in a schematic drawing an embodiment of a refrigeration machine comprising sensors for evaluating the energy efficiency of the chiller;

Figure 2    shows in a schematic drawing an embodiment of a refrigeration machine comprising multiple evaporators and sensors for evaluating the energy efficiency of the refrigeration machine;

Figure 3    shows in a schematic drawing an embodiment of a heat pump comprising sensors for evaluating the energy efficiency of the heat pump; and

Figure 4    shows in a schematic drawing an embodiment of a heat pump comprising multiple evaporators and sensors for evaluating the energy efficiency of the heat pump.

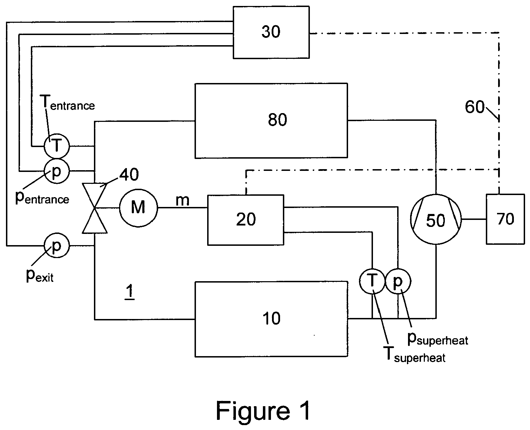

**Figure 1** shows in a schematic drawing an embodiment of a refrigeration machine implemented as a chiller 1 that comprises means to evaluate the energy efficiency of the chiller 1. The chiller 1 comprises a working fluid running in a thermodynamic cycle which is shown in figure 1. At one point of the thermodynamic cycle, the working fluid runs through an expansion valve 40 which expands the working fluid. The chiller 1 further comprises an evaporator 10 at a position at the thermodynamic cycle that is located behind the expansion valve 40. When running through the evaporator 10, the working fluid evaporates and, thereby, may be used to cool another medium in the vicinity of the evaporator 10 outside the thermodynamic cycle. For this, the evaporator 10 may comprise an outer surface for cooling its environment. The evaporator 10 provides a cooling position for the chiller 1.

Behind the evaporator 10 in the thermodynamic cycle, the chiller 1 comprises a compressor 50. The compressor 50 may be powered by electrical power $P_{el}$ and compresses the evaporated working fluid into a smaller volume. From this point on, the thermodynamic cycle of the chiller continues to a condenser 80 for condensing the working fluid, thereby providing an outer warming surface of the condenser. After passing the condenser, the working fluid is substantially liquid and may be guided back to the expansion valve 40 to run through the thermodynamic cycle again.

The chiller 1 further comprises a processor 30 that helps to evaluate the energy efficiency of the chiller 1. The processor 30 may be part of a computer system like a laptop, a computer, tablet, cell phone, or the like. At different positions of the thermodynamic cycle of the chiller 1, the temperature T and the pressure p of the working fluid are measured by sensors and/or detectors. The measured temperatures and pressures are submitted to the processor 30 which uses the detected values to evaluate the energy efficiency of the chiller 1. The detected thermodynamic parameters like temperature and pressure may be sent to the processor via cable, via optical fiber, or wirelessly. The detected thermodynamic parameters may also be sent to a different component first, before they are sent on to the processor. For example, in the chiller 1 shown in figure 1, a superheat temperature $T_{superheat}$ and a superheat pressure $p_{superheat}$ detected behind the evaporator 10 are submitted to a controller 20 of the chiller 1 that provides these thermodynamic parameters to the processor 30.

The controller 20 controls the opening of the expansion valve 40, e.g., its opening size and/or its opening duration. By controlling the opening of the expansion valve 40, the controller 20 also influences the mass flow of the working fluid running through the thermodynamic cycle. For example, the opening size of the expansion valve 40 may be controlled in multiple opening steps. Alternatively or additionally, the opening duration of the expansion valve 40 may be controlled by multiple possible opening durations. The controller 20 controls the opening of the expansion valve 40 by controlling a valve motor M and establishes an opening size information m about the opening.

At different positions of the thermodynamic cycle, temperature information T and pressure information p are detected for the working fluid and provided to the processor 30 and/or the controller 20.

A bus 60 connects the controller 20 to the processor 30. The bus 60 may be implemented as Modbus RTU or TCP, LON, CAN, KNX, EIB, BACNet or the like. The bus 60 may be used to transmit opening information m about the opening of the expansion valve 40, temperature information T, and/or pressure information p of the working fluid after passing through the evaporator 10. The bus 60 may be connected to an electrical power measuring device 70 which measures the electrical power $P_{el}$ of the compressor 50. The bus 60 may transmit one or more of the following information measured and provided by the electrical power measuring device 70: the total electrical power, the individual electrical power for each phase, the total energy, the energy for each phase, the voltage, the current, the phase angle at the compressor 50, and/or further data.

The processor 30 uses all or some of the information provided to evaluate the energy efficiency of the chiller 1 according to the following method:

First, from the entrance temperature $T_{entrance}$ and the entrance pressure $p_{entrance}$ before the expansion valve 40, the exit pressure $p_{exit}$ behind the expansion valve, and the opening information m, the mass flow of the working fluid is calculated.

For a gradually controlled expansion valve, the opening information m may correspond to a characteristic of the opening size of the expansion valve 40. The opening information m may be given as a percentage, in steps, or the like. From the opening size of the expansion valve 40, the flow factor $k_v$ is calculated. A connection between the opening size of the expansion valve 40 and the flow factor $k_v$ may be given by the manufacturer of the expansion valve. In particular, most manufacturers of electronically controlled expansion valves provide information about said connection. As an exemplary embodiment, the manufacturer Carel publishes the flow factors $k_v$ corresponding to the opening steps of different expansion valves in a table. This table is shown as table 1 below:

Table 1: Exemplary flow factors $k_v$ corresponding to the opening steps and/or opening rates of different expansion valves of the manufacturer Carel Industries S.r.l.

| Opening | Opening | Valve size 1 | Valve size 2 | Valve size 3 |
|---|---|---|---|---|
| ca. data | | Kv-Value | Kv-Value | Kv-Value |
| [%] | [Steps] | [m$^3$/h] | [m$^3$/h] | [m$^3$/h] |
| 100 | 480 | 0.012000 | 0.023000 | 0.042000 |
| 94 | 450 | 0.010630 | 0.020375 | 0.037206 |
| 88 | 420 | 0.009192 | 0.017617 | 0.032171 |
| 81 | 390 | 0.007948 | 0.015233 | 0.027816 |
| 75 | 360 | 0.006872 | 0.013171 | 0.024052 |
| 69 | 330 | 0.005942 | 0.011388 | 0.020796 |
| 63 | 300 | 0.005138 | 0.009847 | 0.017982 |
| 56 | 270 | 0.004442 | 0.008514 | 0.015548 |
| 50 | 240 | 0.003841 | 0.007362 | 0.013444 |
| 44 | 210 | 0.003321 | 0.006366 | 0.011624 |
| 38 | 180 | 0.002872 | 0.005504 | 0.010051 |
| 31 | 150 | 0.002483 | 0.004759 | 0.008690 |
| 25 | 120 | 0.002147 | 0.004115 | 0.007514 |
| 19 | 90 | 0.001856 | 0.003558 | 0.006497 |
| 13 | 60 | 0.001605 | 0.003076 | 0.005618 |
| 6 | 30 | 0.001388 | 0.002660 | 0.004857 |
| 0 | 0 | 0.000000 | 0.000000 | 0.000000 |

The columns of table 1 are labelled E2V05 to E4V97 and refer to different types of expansion valves. The rows of table 1 give the number of control steps for the different types of expansion valves from 0 steps to 480 steps. The corresponding flow factor $k_v$ may be looked up for each opening step of the according expansion valve type.

Alternatively and/or additionally, the flow factor may be calculated from the opening information m by another dependency function given by the manufacturer, e.g., a polynomial function. For the expansion valve of Carel, such a function is given as:

$$k_v = -1.07524\text{E-}16x6 + 1.65743\text{E-}13x5 - 9.88637\text{E-}11x4 + 2.90481\text{E-}08x3 - 4.16075\text{E-}06x2 + 3.14175\text{E-}04x + 2.70825\text{E-}04.$$

Therein, x depends on the opening information m.

For pulse duration modulated expansion valves, the flow factor $k_v$ may be calculated similarly.

Then, the processor 30 calculates a difference of the superheat enthalpy $h_{superheat}$ behind the evaporator 10 and the entrance enthalpy $h_{entrance}$ before the expansion valve 40. Together with the mass flow $\dot{m}_F$, the cooling power $\dot{Q}_0$ of the chiller/refrigeration machine 1 may be calculated from this information.

The calculated cooling power $\dot{Q}_0$ is set in relation to the electrical power $P_{el}$ at the compressor 50. Therefrom, the processor 30 may calculate the energy efficiency COP and/or EER of the chiller 1.

In an embodiment, the TCOP (short for: Total Coefficient of Performance) as defined in VDMA 24247-7 is calculated as measurement of the energy efficiency. Thus, not only the electrical power $P_{el}$ used by the compressor 50, but also further power consumption of other electrical components (pumps, ventilators, etc.) is considered.

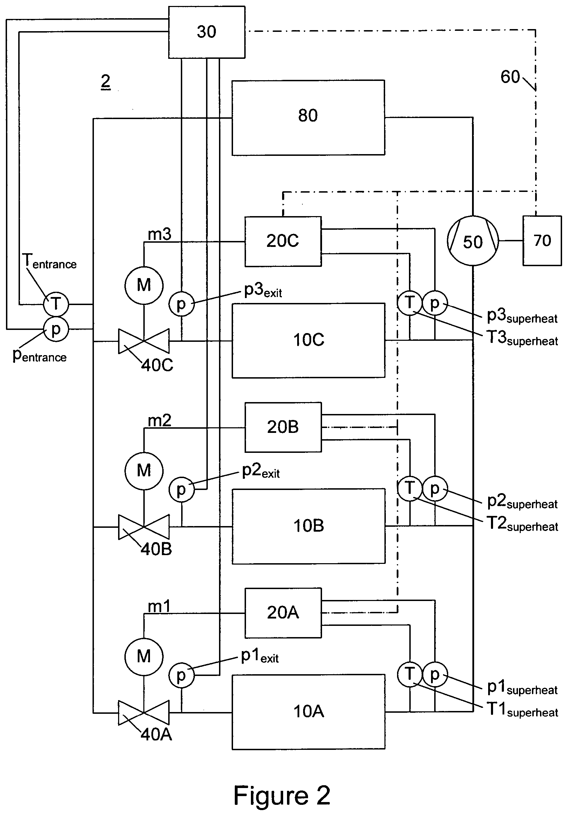

**Figure 2** shows in a schematic drawing an embodiment of a refrigeration machine implemented as a chiller 2 comprising multiple evaporators and sensors for evaluating the energy efficiency of the refrigeration machine 2. The refrigeration machine 2 comprises a first evaporator 10A, a second evaporator 10B, and a third evaporator 10C provided in parallel to each other. The refrigeration machine 2 also comprises a working fluid running in a thermodynamic cycle. However, at one point of this thermodynamic cycle, the working fluid is led through multiple branches which are provided parallel to each other. The first of these parallel branches comprises the first evaporator 10A, a first controller 20A, and a first expansion valve 40A. The second of these parallel branches comprises the second evaporator 10B, a second controller 20B, and a second expansion valve 40B and so on. Thus, each of these parallel branches comprises an evaporator, a controller, and an expansion valve as components.

In the refrigeration machine 2, the bus 60 connects all controllers 20A, 20B, and 20C to the processor 30 and to the electrical power measuring device 70.

While the chiller 2 shown in figure 2 comprises three parallel branches with the respective components, other embodiments may comprise more than three such branches, or only one or two branches.

In the chiller 2, the working fluid is evaporated at three different evaporators, then joined and led through the common compressor 50.

Opening information m is provided at each expansion valve 40A, 40B, and 40C and received by the corresponding controller. While the entrance temperature $T_{entrance}$ and the entrance pressure $p_{entrance}$ of the working fluid may be detected at only one position, the exit pressure $p_{exit}$ is detected after each of the expansion valves 40A, 40B and 40C. However, the entrance temperature $T_{entrance}$ and the entrance pressure $p_{entrance}$ of the working fluid may also be detected at multiple position of the thermodynamic cycle. The respective exit pressures are identified as first exit pressure $p1_{exit}$, as second exit pressure $p2_{exit}$, and as third exit pressure $p3_{exit}$. Accordingly, also the superheat temperature and superheat pressure of the working fluid is detected after each of the individual evaporators.

Since the chiller 2 comprises multiple evaporators, the calculation of the energy efficiency of the chiller 2 is altered to include a calculation of the mass flow of the working fluid for each of the expansion valves and the cooling power provided in each branch of the chiller 2. A characteristic of the opening is provided as opening information m for each of the expansion valves for each branch. The total evaluation of the energy efficiency of the chiller is altered accordingly.

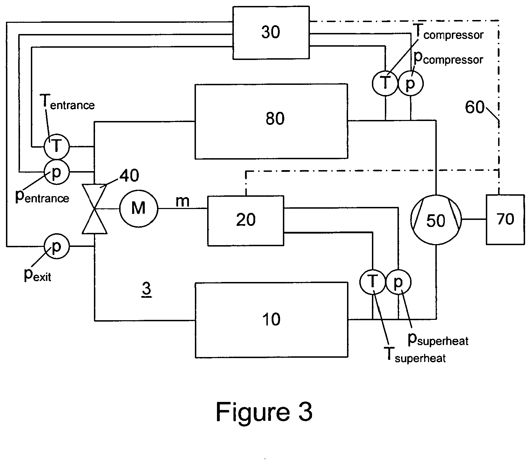

**Figure 3** shows in a schematic drawing an embodiment of a heat pump 3 that comprises means to evaluate the energy efficiency of the heat pump 3. The heat pump 3 comprises a working fluid running in a thermodynamic cycle which is shown in figure 3 marked by a thick line. The composition of the heat pump 3 corresponds to the composition of the chiller 1 shown in figure 1.

However, for evaluating the energy efficiency of the heat pump 3, the compressor enthalpy $h_{compressor}$ is calculated as a function of the compressor temperature $T_{compressor}$ and the compressor pressure $p_{compressor}$ together with fluid properties of the working fluid. The heating power of a heat pump is determined as enthalpy difference between the compressor enthalpy $h_{compressor}$ and the entrance entropy $h_{entrance}$. The heating power may be determined from said enthalpy difference and the mass flow, which is established similar as in the chiller 1.

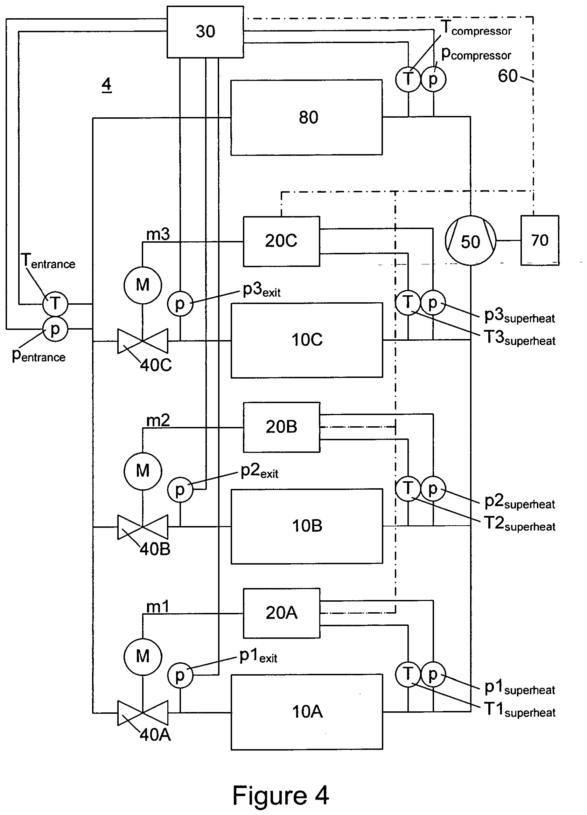

**Figure 4** shows in a schematic drawing an embodiment of a heat pump 4 comprising multiple evaporators and sensors for evaluating the energy efficiency of the heat pump 4. The heat pump 4 comprises a first evaporator 10A, a second evaporator 10B, and a third evaporator 10C provided in parallel to each other. The composition of the heat pump 4 corresponds to the composition of the chiller 2 shown in figure 2.

**List of Reference Numerals**

| | |
|---|---|
| 1 | chiller / refrigeration machine |
| 2 | chiller / refrigeration machine |
| 3 | heat pump |

| | |
|---|---|
| 4 | heat pump |
| 10 | evaporator |
| 10A | first evaporator |
| 10B | second evaporator |
| 10C | third evaporator |
| 20 | controller |
| 20A | first controller |
| 20B | second controller |
| 20C | third controller |
| 30 | processor |
| 40 | expansion valve |
| 40A | first expansion valve |
| 40B | second expansion valve |
| 40C | third expansion valve |
| 50 | compressor |
| 60 | bus |
| 70 | electrical power measuring device |
| 80 | condenser |
| M | valve motor |
| m | opening information |
| p | pressure-information |
| $p_{compressor}$ | compressor pressure |
| $p_{entrance}$ | entrance pressure |
| $p_{exit}$ | exit pressure |
| $p1_{exit}$ | first exit pressure |
| $p2_{exit}$ | second exit pressure |
| $p3_{exit}$ | third exit pressure |
| $p_{superheat}$ | superheat pressure |
| $p1_{superheat}$ | first superheat pressure |
| $p2_{superheat}$ | second superheat pressure |
| $p3_{superheat}$ | third superheat pressure |
| T | temperature information |
| $T_{compressor}$ | compressor temperature |
| $T_{entrance}$ | entrance temperature |
| $T_{superheat}$ | superheat temperature |
| $T1_{superheat}$ | first superheat temperature |
| $T2_{superheat}$ | second superheat temperature |
| $T3_{superheat}$ | third superheat temperature |

**Claims**

1. Method for evaluating the energy efficiency of a refrigeration machine (1; 2) and/or a heat pump (3; 4), in which a working fluid of the refrigeration machine (1; 2) and/or heat pump (3; 4) is running through an expansion valve (40; 40A, 40B, 40C) at one point of a thermodynamic cycle, wherein:

    - an entrance pressure $p_{entrance}$ of the working fluid is detected at a position of the thermodynamic cycle where the working fluid enters the expansion valve (40; 40A, 40B, 40C);
    - an exit pressure $p_{exit}$ of the working fluid is detected at a position of the thermodynamic cycle where the working fluid exits the expansion valve (40; 40A, 40B, 40C);
    - a flow factor $k_v$ is established as a function of the opening of the expansion valve (40; 40A, 40B, 40C);
    - a volume flow $\dot{V}_F$ of the working fluid through the thermodynamic cycle is calculated according to the formula:

$$\dot{V}_F = k_v \cdot \sqrt{\frac{\Delta p \cdot \rho_0}{\Delta p_0 \cdot \rho_{entrance}}},$$

wherein:

- $\Delta p$ is defined as difference between the detected exit pressure $p_{exit}$ and the detected entrance pressure $p_{entrance}$;
- $\Delta p_0$ is defined as a reference difference between the exit pressure and the entrance pressure;
- $\rho_{entrance}$ is defined as entrance density at the entrance of the expansion valve (40; 40A, 40B, 40C); and
- $\rho_0$ is defined as the reference density of the working fluid;

- using the calculated volume flow $\dot{V}_F$, the mass flow $\dot{m}_F$ is calculated by the formula:

$$\dot{m}_F = \dot{V}_F \cdot \rho_{entrance};$$

- a cooling power and/or a heating power ($\dot{Q}$) of the refrigeration machine (1; 2) and/or heat pump (3; 4) is determined as a function of the mass flow ($\dot{m}_F$) of the working fluid; and
- the energy efficiency of the refrigeration machine (1; 2) and/or heat pump (3; 4) is evaluated by comparing the cooling power and/or heating power ($\dot{Q}$) to an electrical power ($P_{el}$) used to power the refrigeration machine and/or heat pump.

2. Method according to claim 1, wherein a classification (m) of the opening of the expansion valve (40; 40A, 40B, 40C) is determined as opening information.

3. Method according to claim 1 or 2, wherein the expansion valve (40; 40A, 40B, 40C) is provided as electronically controlled expansion valve.

4. Method according to any of the preceding claims, wherein at least a temperature of the working fluid is further detected as thermodynamic parameter ($T_{entrance}$, $T_{superheat}$, $T_{compressor}$) at predetermined positions of the thermodynamic cycle.

5. Method according to any of the preceding claims, wherein only a temperature is further directly detected as thermodynamic parameters ($T_{entrance}$, $T_{superheat}$, $T_{compressor}$) of the working fluid.

6. Method according to any of the preceding claims, wherein at least one superheat thermodynamic parameter ($T_{superheat}$, $p_{superheat}$, $p1_{superheat}$, $p2superheat$, $p3_{superheat}$, $T1_{superheat}$, $T2_{superheat}$, $T3_{superheat}$) of the working fluid is detected at a position of the thermodynamic cycle where the working fluid exits an evaporator (10; 10A, 10B, 10C).

7. Method according to claim 6, wherein

- for a position of the thermodynamic cycle where the working fluid enters the expansion valve (40; 40A, 40B, 40C), an entrance enthalpy ($h_{entrance}$) of the working fluid is determined using the at least one entrance thermodynamic parameter ($T_{entrance}$, $p_{entrance}$);
- for a position of the thermodynamic cycle where the working fluid exits the evaporator (10; 10A, 10B, 10C), an superheat enthalpy ($h_{superheat}$) of the working fluid is determined using the at least one superheat thermodynamic parameter ($T_{superheat}$, $p_{superheat}$, $p1_{superheat}$, $p2superheat$, $p3_{superheat}$, $T1_{superheat}$, $T2_{superheat}$, $T3_{superheat}$); and
- the cooling power and/or heating power ($\dot{Q}$) of the refrigeration machine (1; 2) and/or heat pump (3; 4) is determined as enthalpy-difference ($\Delta h$) between the superheat enthalpy ($h_{superheat}$) and the entrance enthalpy ($h_{entrance}$).

8. Method according to any of the preceding claims, wherein the energy efficiency of a refrigeration machine (2) and/or a heat pump (4) is evaluated that comprises two or more cooling positions (10A, 10B, 10C).

9. Apparatus for evaluating the energy efficiency of a refrigeration machine (1; 2) and/or a heat pump (3; 4), wherein a working fluid of the refrigeration machine (1; 2) and/or heat pump (3; 4) is running through an expansion valve (40; 40A, 40B, 40C) at one point of a thermodynamic cycle, comprising:

- detectors at different positions of the thermodynamic cycle, wherein each detector detects at least one thermodynamic parameter ($T_{entrance}$, $p_{entrance}$, $p_{exit}$, $T_{superheat}$, $p_{superheat}$, $T_{compressor}$, $p_{compressor}$) of the working fluid, wherein an entrance pressure $p_{entrance}$ of the working fluid is detected at a position of the thermodynamic cycle where the working fluid enters the expansion valve, and an exit pressure $p_{exit}$ of the working fluid is detected at a position of the thermodynamic cycle where the working fluid exits the expansion valve;
- a processor (30) that

- establishes a flow factor $k_v$ as a function of the opening of the expansion valve (40; 40A, 40B, 40C);

- - calculates a volume flow $\dot{V}_F$ of the working fluid through the thermodynamic cycle according to the formula:

$$\dot{V}_F = k_v \cdot \sqrt{\frac{\Delta p \cdot \rho_0}{\Delta p_0 \cdot \rho_{entrance}}} ,$$

wherein:

- $\Delta p$ is defined as difference between the detected exit pressure $p_{exit}$ and the detected entrance pressure $p_{entrance}$;
- $\Delta p_0$ is defined as a reference difference between the exit pressure and the entrance pressure;
- $\rho_{entrance}$ is defined as entrance density at the entrance of the expansion valve (40; 40A, 40B, 40C); and
- $\rho_0$ is defined as the reference density of the working fluid; and

- - uses the calculated volume flow $\dot{V}_F$ to calculate the mass flow $\dot{m}_F$ by the formula:

$$\dot{m}_F = \dot{V}_F \cdot \rho_{entrance} ;$$

- wherein the processor determines a cooling power and/or a heating power (Q) of the refrigeration machine (1; 2) and/or heat pump (3; 4) as a function of the mass flow ($\dot{m}_F$) of the working fluid; and
- wherein the processor (30) evaluates the energy efficiency of the refrigeration machine (1; 2) and/or heat pump (3; 4) by comparing the cooling power and/or heating power ($\dot{Q}$) to an electrical power ($P_{el}$) used to power the refrigeration machine (1; 2) and/or heat pump (3; 4).

10. Apparatus according to claim 9, comprising the refrigeration machine (1, 2) and/or the heat pump (3, 4) with the expansion valve (40; 40A, 40B, 40C), the apparatus further comprising at least one controller (20; 20A, 20B, 20C) that controls the opening of the expansion valve (40; 40A, 40B, 40C) and provides the processor (20; 20A, 20B, 20C) with an according classification (m) of the opening of the expansion valve (40; 40A, 40B, 40C).

11. Apparatus according to claim 10, comprising a bus (60) that transfers signals (m, T, p) between the controller (20; 20A, 20B, 20C) and the processor (30).

12. A computer program product comprising computer-readable instructions, which, when loaded and executed on a computer system, cause an apparatus according to claim 9 to perform operations according to the method of claims 1-8.

**Patentansprüche**

1. Ein Verfahren zum Beurteilen der Energieeffizienz einer Kältemaschine (1; 2) und/oder einer Wärmepumpe (3; 4), bei denen ein Arbeitsfluid der Kältemaschine (1; 2) und/oder der Wärmepumpe (3; 4) an einem Punkt eines thermodynamischen Kreisprozesses durch ein Expansionsventil (40; 40A, 40B, 40C) strömt, wobei:

- ein Eingangsdruck $p_{entrance}$ des Arbeitsfluids an einer Stelle des thermodynamischen Kreisprozesses erfasst wird, an der das Arbeitsfluid in das Expansionsventil (40; 40A, 40B, 40C) eintritt;
- ein Austrittsdruck $p_{exit}$ des Arbeitsfluids an einer Stelle des thermodynamischen Kreisprozesses erfasst wird, an der das Arbeitsfluid das Expansionsventil (40; 40A, 40B, 40C) verlässt;
- ein Durchflussfaktor $k_v$ in Abhängigkeit von der Öffnung des Expansionsventils (40; 40A, 40B, 40C) festgelegt wird;

- ein Volumenstrom $\dot{V}_F$ des Arbeitsfluids durch den thermodynamischen Kreisprozess wird gemäß der Formel berechnet:

$$\dot{V}_F = k_v \cdot \sqrt{\frac{\Delta p \cdot \rho_0}{\Delta p_0 \cdot \rho_{entrance}}}$$

wobei:

- $\Delta p$ definiert ist als Differenz zwischen dem erfassten Ausgangsdruck $p_{exit}$ und dem festgestellten Eingangsdruck $p_{entrance}$;
- $\Delta p_0$ definiert ist als eine Referenzdifferenz zwischen dem Ausgangsdruck und dem Eingangsdruck;
- $\rho_{entrance}$ definiert ist als Eingangsdichte am Eingang des Expansionsventils (40; 40A, 40B, 40C); und wobei
- $\rho_0$ definiert ist als die Bezugsdichte des Arbeitsfluids;

- unter Verwendung des berechneten Volumenstroms $\dot{V}_F$ der Massenstrom $\dot{m}_F$ durch die folgende Formel berechnet wird:

$$\dot{m}_F = \dot{V}_F \cdot \rho_{entrance}$$

- eine Kühlleistung und/oder eine Heizleistung (Q) der Kältemaschine (1; 2) und/oder der Wärmepumpe (3; 4) in Abhängigkeit vom Massenstrom ($\dot{m}_F$) des Arbeitsfluids bestimmt wird; und wobei
- die Energieeffizienz der Kältemaschine (1; 2) und/oder Wärmepumpe (3; 4) beurteilt wird, indem die Kühlleistung und/oder Heizleistung (Q) mit einer elektrischen Leistung ($P_{el}$) verglichen wird, die zum Antrieb der Kältemaschine und/oder Wärmepumpe verwendet wird.

2. Das Verfahren nach Anspruch 1, wobei eine Klassifizierung (m) der Öffnung des Expansionsventils (40; 40A, 40B, 40C) als Öffnungsinformation bestimmt wird.

3. Das Verfahren nach Anspruch 1 oder 2, wobei das Expansionsventil (40; 40A, 40B, 40C) als elektronisch gesteuertes Expansionsventil vorgesehen ist.

4. Das Verfahren nach irgendeinem der vorstehenden Ansprüche, wobei ferner mindestens eine Temperatur des Arbeitsfluids als thermodynamischer Parameter ($T_{entrance}$, $T_{superheat}$, $T_{compressor}$) an vorbestimmten Positionen des thermodynamischen Kreisprozesses erfasst wird.

5. Das Verfahren nach irgendeinem der vorstehenden Ansprüche, wobei ferner nur eine Temperatur als thermodynamischer Parameter ($T_{entrance}$, $T_{superheat}$, $T_{compressor}$) des Arbeitsfluids direkt erfasst wird.

6. Das Verfahren nach irgendeinem der vorstehenden Ansprüche, bei dem mindestens ein thermodynamischer Überhitzungs-Parameter ($T_{superheat}$, $p_{superheat}$, $p1_{superheat}$, $p2_{superheat}$, $p3_{superheat}$, $T1_{superheat}$, $T2_{superheat}$, $T3superheat$) des Arbeitsfluids an einer Stelle des thermodynamischen Kreisprozesses erfasst wird, an der das Arbeitsfluid aus einem Verdampfer (10; 10A, 10B, 10C) austritt.

7. Das Verfahren nach Anspruch 6, wobei

- für eine Position des thermodynamischen Kreisprozesses, an der das Arbeitsfluid in das Expansionsventil (40; 40A, 40B, 40C) eintritt, eine Eintrittsenthalpie ($h_{entrance}$) des Arbeitsfluids unter Verwendung des mindestens einen thermodynamischen Eingangsparameters ($T_{entrance}$, $P_{entrance}$) bestimmt wird;
- für eine Position des thermodynamischen Kreisprozesses, an der das Arbeitsfluid aus dem Verdampfer (10; 10A, 10B, 10C) austritt, eine Überhitzungs-Enthalpie ($h_{superheat}$) des Arbeitsfluids unter Verwendung des mindestens einen thermodynamischen Überhitzungs-Parameters ($T_{superheat}$, $P_{superheat}$, $p1_{superheat}$, $p2_{superheat}$, $p3_{superheat}$, $T1_{superheat}$, $T2_{superheat}$, $T3superheat$) bestimmt wird; und wobei
- die Kühlleistung und/oder Heizleistung (Q) der Kältemaschine (1; 2) und/oder Wärmepumpe (3; 4) als Enthalpie-Differenz ($\Delta h$) zwischen der Überhitzungs-Enthalpie ($h_{superheat}$) und der EintrittsEnthalpie ($h_{entrance}$) bestimmt wird.

8. Das Verfahren nach irgendeinem der vorstehenden Ansprüche, wobei die Energieeffizienz einer Kältemaschine (2) und/oder einer Wärmepumpe (4) bewertet wird, die zwei oder mehr Kühlpositionen (10A, 10B, 10C) umfasst.

9. Eine Vorrichtung zum Beurteilen der Energieeffizienz einer Kältemaschine (1; 2) und/oder einer Wärmepumpe (3; 4), wobei ein Arbeitsfluid der Kältemaschine (1; 2) und/oder der Wärmepumpe (3; 4) an einem Punkt eines thermodynamischen Kreisprozesses durch ein Expansionsventil (40; 40A, 40B, 40C) läuft, umfassend:

   - Detektoren an verschiedenen Positionen des thermodynamischen Kreisprozesses, wobei jeder Detektor mindestens einen thermodynamischen Parameter ($T_{entrance}$, $P_{entrance}$, $p_{exit}$, $T_{superheat}$, $p_{superheat}$, $T_{compressor}$, $p_{compressor}$) des Arbeitsfluids erfasst, wobei ein Eintrittsdruck $p_{entrance}$ des Arbeitsfluids an einer Position des thermodynamischen Kreisprozesses erfasst wird, an der das Arbeitsfluid in das Expansionsventil eintritt, und wobei ein Austrittsdruck $p_{exit}$ des Arbeitsfluids an einer Position des thermodynamischen Kreisprozesses erfasst wird, an der das Arbeitsfluid das Expansionsventil verlässt;
   - einen Prozessor (30), der Folgendes bewerkstelligt:

      - Festlegen eines Durchflussfaktors $k_v$ in Abhängigkeit von der Öffnung des Expansionsventils (40; 40A, 40B, 40C);
      - Berechnen eines Volumenstroms $\dot{V}_F$ des Arbeitsfluids durch den thermodynamischen Kreisprozess nach der Formel:

$$\dot{V}_F = k_v \cdot \sqrt{\frac{\Delta p \cdot \rho_0}{\Delta p_0 \cdot \rho_{entrance}}}$$

      wobei:

         - $\Delta p$ definiert ist als Differenz zwischen dem erfassten Ausgangsdruck $p_{exit}$ und dem festgestellten Eingangsdruck $p_{entrance}$;
         - $\Delta p_0$ definiert ist als eine Referenzdifferenz zwischen dem Ausgangsdruck und dem Eingangsdruck;
         - $\rho_{entrance}$ definiert ist als Eingangsdichte am Eingang des Expansionsventils (40; 40A, 40B, 40C); und wobei
         - $\rho_0$ definiert ist als die Bezugsdichte des Arbeitsfluids; und

      - Verwenden des berechneten Volumenstroms $\dot{V}_F$, um den Massenstrom $\dot{m}_F$ nach der folgenden Formel zu berechnen:

$$\dot{m}_F = \dot{V}_F \cdot \rho_{entrance}$$

      - wobei der Prozessor eine Kühlleistung und/oder eine Heizleistung ($\dot{Q}$) der Kältemaschine (1; 2) und/oder Wärmepumpe (3; 4) als eine Funktion des Massenstroms ($\dot{m}_F$) des Arbeitsfluids bestimmt; und
      - wobei der Prozessor (30) die Energieeffizienz der Kältemaschine (1; 2) und/oder Wärmepumpe (3; 4) beurteilt, indem er die Kühlleistung und/oder Heizleistung (Q) mit einer elektrischen Leistung ($P_{el}$) vergleicht, die verwendet wird, um die Kältemaschine (1; 2) und/oder Wärmepumpe (3; 4) anzutreiben.

10. Die Vorrichtung nach Anspruch 9, die die Kältemaschine (1, 2) und/oder die Wärmepumpe (3, 4) mit dem Expansionsventil (40; 40A, 40B, 40C) umfasst, wobei die Vorrichtung ferner mindestens eine Steuerung (20; 20A, 20B, 20C) umfasst, die die Öffnung des Expansionsventils (40; 40A, 40B, 40C) steuert und dem Prozessor (20; 20A, 20B, 20C) eine entsprechende Klassifizierung (m) der Öffnung des Expansionsventils (40; 40A, 40B, 40C) liefert.

11. Die Vorrichtung nach Anspruch 10, die einen Bus (60) umfasst, der Signale ($m, T, p$) zwischen dem Regler (20; 20A, 20B, 20C) und dem Prozessor (30) überträgt.

12. Ein Computerprogrammprodukt, das computerlesbare Anweisungen umfasst, die, wenn sie in ein Computersystem geladen und dort ausgeführt werden, bewirken, dass eine Vorrichtung nach Anspruch 9 Operationen entsprechend dem Verfahren nach irgendeinem der Ansprüche 1-8 durchführt.

**Revendications**

1.  Un procédé d'évaluation de l'efficacité énergétique d'une machine frigorifique (1 ; 2) et/ou d'une pompe à chaleur (3 ; 4), dans lesquelles un fluide de travail de la machine frigorifique (1 ; 2) et/ou de la pompe à chaleur (3 ; 4) circule à travers une vanne d'expansion (40 ; 40A, 40B, 40C) en un point d'un cycle thermodynamique, sachant que :

    - une pression d'entrée $p_{entrance}$ du fluide de travail est détectée à un point du cycle thermodynamique où le fluide de travail entre dans la vanne d'expansion (40 ; 40A, 40B, 40C) ;
    - une pression de sortie $p_{exit}$ du fluide de travail est détectée à une position du cycle thermodynamique où le fluide de travail sort de la vanne d'expansion (40 ; 40A, 40B, 40C) ;
    - un facteur de débit $k_v$ est établi en fonction de l'ouverture de la vanne d'expansion (40 ; 40A, 40B, 40C) ;
    - un débit volumique $\dot{V}_F$ du fluide de travail à travers le cycle thermodynamique est calculé selon la formule :

    $$\dot{V}_F = k_v \cdot \sqrt{\frac{\Delta p \cdot \rho_0}{\Delta p_0 \cdot \rho_{entrance}}}$$

    sachant que :

    - $\Delta p$ est défini comme la différence entre la pression de sortie détectée $p_{exit}$ et la pression d'entrée détectée $p_{entrance}$ ;
    - $\Delta p_0$ est défini comme une différence de référence entre la pression de sortie et la pression d'entrée ;
    - $\rho_{entrance}$ est défini comme la densité d'entrée à l'entrée de la vanne d'expansion (40 ; 40A, 40B, 40C) ; et
    - $\rho_0$ est défini comme la densité de référence du fluide de travail ;

    - en utilisant le débit volumique calculé $\dot{V}_F$, le débit massique $\dot{m}_F$ est calculé par la formule :

    $$\dot{m}_F = \dot{V}_F \cdot \rho_{entrance}$$

    - une puissance de refroidissement et/ou une puissance de chauffage (Q) de la machine frigorifique (1 ; 2) et/ou de la pompe à chaleur (3 ; 4) est déterminée en fonction du débit massique ($\dot{m}_F$) du fluide de travail ; et que
    - l'efficacité énergétique de la machine frigorifique (1 ; 2) et/ou de la pompe à chaleur (3 ; 4) est évaluée en comparant la puissance de refroidissement et/ou la puissance de chauffage (Q) à une puissance électrique ($P_{el}$) utilisée pour alimenter la machine frigorifique et/ou la pompe à chaleur.

2.  Le procédé d'après la revendication 1, sachant que la classification (m) de l'ouverture de la vanne d'expansion (40 ; 40A, 40B, 40C) est déterminée comme une information d'ouverture.

3.  Le procédé d'après la revendication 1 ou 2, sachant que la vanne d'expansion (40 ; 40A, 40B, 40C) est fournie en tant que vanne d'expansion à commande électronique.

4.  Le procédé d'après l'une des revendications précédentes, sachant qu'au moins une température du fluide de travail est en outre détectée en tant que paramètre thermodynamique ($T_{entrance}$, $T_{superheat}$, $T_{compressor}$) à des positions prédéterminées du cycle thermodynamique.

5.  Le procédé d'après l'une des revendications précédentes, sachant que seule une température est en outre directement détectée en tant que paramètre thermodynamique ($T_{entrance}$, $T_{superheat}$, $T_{compressor}$) du fluide de travail.

6.  Le procédé d'après l'une quelconque des revendications précédentes, sachant que l'on détecte au moins un paramètre thermodynamique de surchauffe *(Tsuperheat, Psuperheat, $p1_{superheat}$, $p2_{superheat}$, $p3_{superheat}$, $T1_{superheat}$, $T2_{superheat}$, $T3_{superheat}$)* du fluide de travail à une position du cycle thermodynamique où le fluide de travail sort d'un évaporateur (10 ; 10A, 10B, 10C).

7.  Le procédé d'après la revendication 6, sachant que

    - pour une position du cycle thermodynamique où le fluide de travail entre dans la vanne d'expansion (40 ; 40A, 40B, 40C), une enthalpie d'entrée ($h_{entrance}$) du fluide de travail est déterminée en utilisant au moins un paramètre thermodynamique d'entrée ($T_{entrance}$, $p_{entrance}$);

- pour une position du cycle thermodynamique où le fluide de travail sort de l'évaporateur (10 ; 10A, 10B, 10C), une enthalpie de surchauffe ($h_{superheat}$) du fluide de travail est déterminée en utilisant le au moins un paramètre thermodynamique de surchauffe ($T_{superheat}$, $p_{superheat}$, $p1_{superheat}$, $p2_{superheat}$, $p3_{superheat}$, $T1_{superheat}$, $T2_{superheat}$, $T3_{superheat}$); et que

- la puissance de refroidissement et/ou de chauffage (Q) de la machine frigorifique (1 ; 2) et/ou de la pompe à chaleur (3 ; 4) est déterminée comme différence d'enthalpie ($\Delta h$) entre l'enthalpie de surchauffe ($h_{superheat}$) et l'enthalpie d'entrée ($h_{entrance}$).

8. Le procédé d'après l'une des revendications précédentes, sachant que l'on évalue l'efficacité énergétique d'une machine frigorifique (2) et/ou d'une pompe à chaleur (4) qui comprend deux ou plusieurs positions de refroidissement (10A, 10B, 10C).

9. Un appareil pour évaluer l'efficacité énergétique d'une machine frigorifique (1 ; 2) et/ou d'une pompe à chaleur (3 ; 4), sachant qu'un fluide de travail de la machine frigorifique (1 ; 2) et/ou de la pompe à chaleur (3 ; 4) circule à travers une vanne d'expansion (40 ; 40A, 40B, 40C) en un point d'un cycle thermodynamique, comprenant :

- des détecteurs à différentes positions du cycle thermodynamique, sachant que chaque détecteur détecte au moins un paramètre thermodynamique ($T_{entrance}$, $p_{entrance}$, $p_{exit}$, $T_{superheat}$, $p_{superheat}$, $T_{compressor}$, $p_{compressor}$) du fluide de travail, sachant que la pression d'entrée $p_{entrance}$ du fluide de travail est détectée à une position du cycle thermodynamique où le fluide de travail entre dans la vanne d'expansion, et que la pression de sortie $p_{exit}$ du fluide de travail est détectée à une position du cycle thermodynamique où le fluide de travail sort de la vanne d'expansion ;

- un processeur (30) qui

- établit un facteur de débit $k_v$ en fonction de l'ouverture de la vanne d'expansion (40 ; 40A, 40B, 40C) ;
- calcule un débit volumique $\dot{V}_F$ du fluide de travail à travers le cycle thermodynamique selon la formule :

$$\dot{V}_F = k_v \cdot \sqrt{\frac{\Delta p \cdot \rho_0}{\Delta p_0 \cdot \rho_{entrance}}}$$

sachant que :

- $\Delta p$ est défini comme la différence entre la pression de sortie détectée $p_{exit}$ et la pression d'entrée détectée $p_{entrance}$ ;
- $\Delta p_0$ est défini comme une différence de référence entre la pression de sortie et la pression d'entrée ;
- $\rho_{entrance}$ est défini comme la densité d'entrée à l'entrée de la vanne d'expansion (40 ; 40A, 40B, 40C) ; et que
- $\rho_0$ est défini comme la densité de référence du fluide de travail ; et qui

- utilise le débit volumique $\dot{V}_F$ calculé pour calculer le débit massique $\dot{m}_F$ par la formule :

$$\dot{m}_F = \dot{V}_F \cdot \rho_{entrance}$$

- sachant que le processeur détermine une puissance de refroidissement et/ou une puissance de chauffage ($\dot{Q}$) de la machine frigorifique (1 ; 2) et/ou de la pompe à chaleur (3 ; 4) en fonction du débit massique ($\dot{m}_F$) du fluide de travail ; et
- sachant que le processeur (30) évalue l'efficacité énergétique de la machine frigorifique (1 ; 2) et/ou de la pompe à chaleur (3 ; 4) en comparant la puissance de refroidissement et/ou de chauffage ($\dot{Q}$) à une puissance électrique ($P_{el}$) utilisée pour alimenter la machine frigorifique (1 ; 2) et/ou la pompe à chaleur (3 ; 4).

10. L'appareil d'après la revendication 9, comprenant la machine frigorifique (1, 2) et/ou la pompe à chaleur (3, 4) avec la vanne d'expansion (40 ; 40A, 40B, 40C), l'appareil comprenant en outre au moins une commande (20 ; 20A, 20B, 20C) qui commande l'ouverture de la vanne d'expansion (40 ; 40A, 40B, 40C) et fournit au processeur (20 ; 20A, 20B, 20C) une classification (m) correspondante de l'ouverture de la vanne d'expansion (40 ; 40A, 40B, 40C).

11. L'appareil d'après la revendication 10, comprenant un bus (60) qui transfère des signaux *(m, T, p)* entre la commande (20 ; 20A, 20B, 20C) et le processeur (30).

12. Un produit programme informatique comprenant des instructions lisibles par ordinateur qui, lorsqu'elles sont chargées et exécutées sur un système informatique, amènent un appareil conforme à la revendication 9 à effectuer des opérations conformément au procédé d'après l'une quelconque des revendications 1-8.

Figure 1

Figure 2

Figure 3

Figure 4

**EP 2 998 667 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5735134 A